# EUROPEAN PATENT APPLICATION

(11) **EP 4 734 391 A1**
(43) Date of publication of application: **29.04.2026**
(21) Application number: 24873025.1
(22) Date of filing: 27.09.2024
(51) Int. Cl.: H04B 7/06, H04B 7/0413, H04W 72/0457, H04W 72/231, H04W 72/232, H04L 1/1812, H04L 5/00

(54) **METHOD AND APPARATUS FOR BEAM MANAGEMENT IN MULTI-TRP SYSTEM**

(30) Priority: 27.09.2023 KR 20230131084
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2024/014693
(87) International publication number: WO 2025/071317

(57) **Abstract**

A method and an apparatus for beam management in a multi-TRP system are disclosed. A method of a UE comprises the steps of: receiving CSI configuration information from a base station; receiving DCI including a CSI request from the base station; receiving an aperiodic CSI-RS on the basis of QCL estimation of a DL signal when an offset between a last symbol of a PDCCH through which the DCI is transmitted and a first symbol of an aperiodic CSI-RS resource is less than a threshold and a DL signal exists in the same symbol as the aperiodic CSI-RS; and transmitting a CSI report including a measurement result of the aperiodic CSI-RS to the base station.

## Description

### [Technical Field]

The present disclosure relates to an enhanced communication technique, and more particularly, to a technique of managing beams for transmission and reception of reference signals in a communication system supporting multiple transmission and reception points (TRPs).

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRP) may be introduced into a communication network (e.g. 5G communication network and/or 6G communication network). The mTRP may be geographically separated. A base station may perform communication with a terminal using the mTRP. mTRP technology may be used to solve a quality of service (QoS) degradation problem of a cell-edge terminal and/or an inter-cell interference problem. In an environment where a non-line-of-sight (NLOS) path is limited, the mTRP technology may be used to provide an additional communication path.

mTRP-based communication may be performed based on a coherent joint transmission (CJT) scheme or a non-CJT (NCJT) scheme. In the CJT scheme, the mTRP may perform cooperative communication based on a stable backhaul link, and the mTRP may provide synchronized communication services to the terminal. In the NCJT scheme, the mTRP may provide communication services to the terminal without cooperation. For example, in the NCJT scheme, the mTRP may perform operations such as scheduling operations, precoding matrix selection operations, and modulation and coding scheme (MCS) determination operations without cooperation.

In mTRP-based communication, a terminal may receive a downlink (DL) channel and/or a DL signal from one or more TRPs, and the terminal may transmit an uplink (UL) channel and/or a UL signal to one or more TRPs. When a plurality of DL transmissions occur in the same time resource, ambiguity regarding beam configuration for reception of the plurality of DL transmissions may occur. In addition, when a plurality of UL transmissions occur in the same time resource, ambiguity regarding beam configuration for the plurality of UL transmissions may occur. Accordingly, rules for beam configuration to resolve the above problems may be required.

### [Disclosure]

### [Technical Problem]

The present disclosure is directed to providing a method and an apparatus for beam management in a communication system supporting multiple TRPs.

### [Technical Solution]

A method of a user equipment (UE), according to exemplary embodiments of the present disclosure for achieving the above-described objective, may comprise: receiving, from a base station, channel state information (CSI) configuration information; receiving, from the base station, downlink control information (DCI) including a CSI request; receiving an aperiodic CSI-reference signal (CSI-RS) based on quasi-co-location (QCL) estimation of a downlink (DL) signal, wherein an offset between a last symbol of a physical downlink control channel (PDCCH) carrying the DCI and a first symbol of the aperiodic CSI-RS resource is smaller than a threshold and the DL signal exists in a same symbol as the aperiodic CSI-RS; and transmitting, to the base station, a CSI report including a measurement result of the aperiodic CSI-RS.

A numerology of the PDCCH carrying the DCI may be identical to a numerology of the aperiodic CSI-RS.

A DL or joint transmission configuration indicator (TCI) state list may be configured for the UE, and the UE may be configured with two indicated TCI states.

The method may further comprise: receiving the aperiodic CSI-RS based on a first indicated joint/DL TCI state or a second indicated joint/DL TCI state, based on the offset being smaller than the threshold and the DL signal not existing in the same symbol as the aperiodic CSI-RS.

The DL signal may have an indicated TCI state, and the QCL estimation may correspond to the indicated TCI state.

The offset may be an offset for beam switching timing, and the beam switching timing may indicate a time required for beam switching.

CSI-RS triggering with beam switching may be indicated to the UE, and a beam for receiving the DCI may be different from a beam for receiving the aperiodic CSI-RS.

The DL signal existing in the same symbol as the aperiodic CSI-RS may be a periodic CSI-RS, a semi-persistent CSI-RS, or another aperiodic CSI-RS, and each of the periodic CSI-RS, the semi-persistent CSI-RS, or the another aperiodic CSI-RS may be scheduled to have an offset equal to or greater than a threshold for beam switching timing.

The DL signal existing in the same symbol as the aperiodic CSI-RS may be a physical downlink shared channel (PDSCH), and the PDSCH may be scheduled to have an offset equal to or greater than a threshold for a time duration for QCL.

The DL signal existing in the same symbol as the aperiodic CSI-RS may be a PDSCH, two indicated joint/DL TCI states may be applied to the PDSCH, and the QCL estimation may correspond to a first indicated joint/DL TCI state or a second indicated joint/DL TCI state among the two indicated joint/DL TCI states.

A user equipment (UE), according to exemplary embodiments of the present disclosure for achieving the above-described objective, may comprise at least one processor, wherein the at least one processor may cause the UE to perform: receiving, from a base station, channel state information (CSI) configuration information; receiving, from the base station, downlink control information (DCI) including a CSI request; receiving an aperiodic CSI-reference signal (CSI-RS) based on quasi-co-location (QCL) estimation of a downlink (DL) signal, wherein an offset between a last symbol of a physical downlink control channel (PDCCH) carrying the DCI and a first symbol of the aperiodic CSI-RS resource is smaller than a threshold and the DL signal exists in a same symbol as the aperiodic CSI-RS; and transmitting, to the base station, a CSI report including a measurement result of the aperiodic CSI-RS.

A numerology of the PDCCH carrying the DCI may be identical to a numerology of the aperiodic CSI-RS.

A DL or joint transmission configuration indicator (TCI) state list may be configured for the UE, and the UE may be configured with two indicated TCI states.

The at least one processor may cause the UE to perform: receiving the aperiodic CSI-RS based on a first indicated joint/DL TCI state or a second indicated joint/DL TCI state, based on the offset being smaller than the threshold and the DL signal not existing in the same symbol as the aperiodic CSI-RS.

The DL signal may have an indicated TCI state, and the QCL estimation may correspond to the indicated TCI state.

The offset may be an offset for beam switching timing, and the beam switching timing may indicate a time required for beam switching.

CSI-RS triggering with beam switching may be indicated to the UE, and a beam for receiving the DCI may be different from a beam for receiving the aperiodic CSI-RS.

The DL signal existing in the same symbol as the aperiodic CSI-RS may be a periodic CSI-RS, a semi-persistent CSI-RS, or another aperiodic CSI-RS, and each of the periodic CSI-RS, the semi-persistent CSI-RS, or the another aperiodic CSI-RS may be scheduled to have an offset equal to or greater than a threshold for beam switching timing.

The DL signal existing in the same symbol as the aperiodic CSI-RS may be a physical downlink shared channel (PDSCH), and the PDSCH may be scheduled to have an offset equal to or greater than a threshold for a time duration for QCL.

The DL signal existing in the same symbol as the aperiodic CSI-RS may be a PDSCH, two indicated joint/DL TCI states may be applied to the PDSCH, and the QCL estimation may correspond to a first indicated joint/DL TCI state or a second indicated joint/DL TCI state among the two indicated joint/DL TCI states.

### [Advantageous Effects]

According to the present disclosure, the unified TCI framework can be extended to an mTRP system. A terminal can select (e.g. determine) a beam configuration (e.g. a TCI state or a QCL configuration) based on a predefined method (e.g. predefined rules), and can perform a reception operation and/or a measurement operation for CSI-RS based on the selected beam configuration. Accordingly, ambiguity regarding beam configuration can be resolved, and performance of the communication system can be improved.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a sequence diagram illustrating exemplary embodiments of a CSI measurement and reporting method.
FIG. 10A is a conceptual diagram illustrating an arrangement of an AP CSI-RS according to Case 1.
FIG. 10B is a conceptual diagram illustrating an arrangement of an AP CSI-RS according to Case 2.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

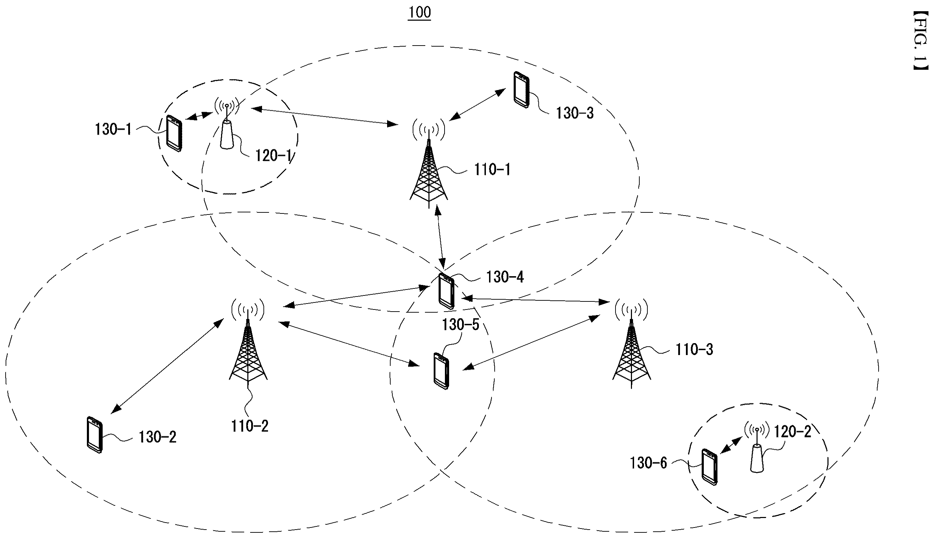

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

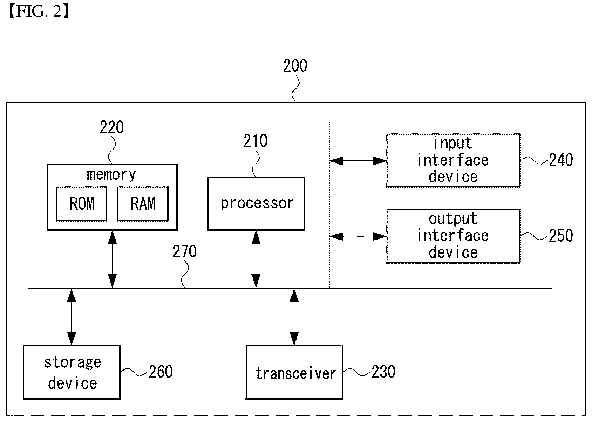

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

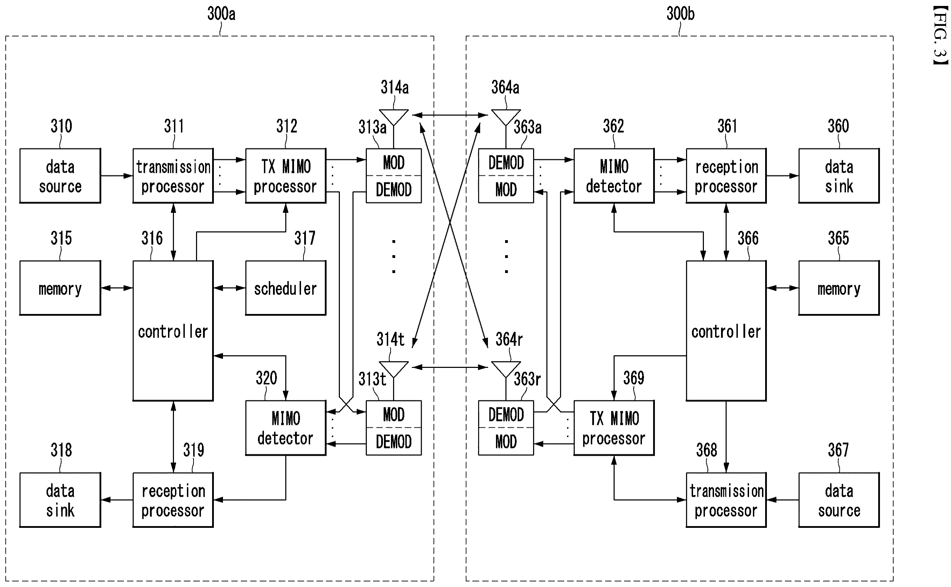

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

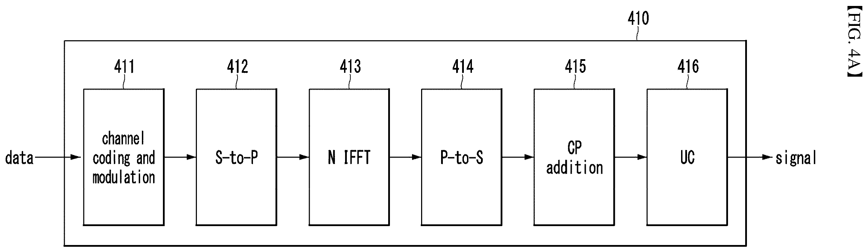

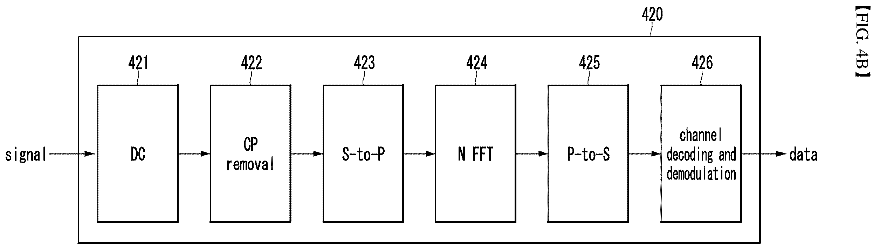

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g. parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

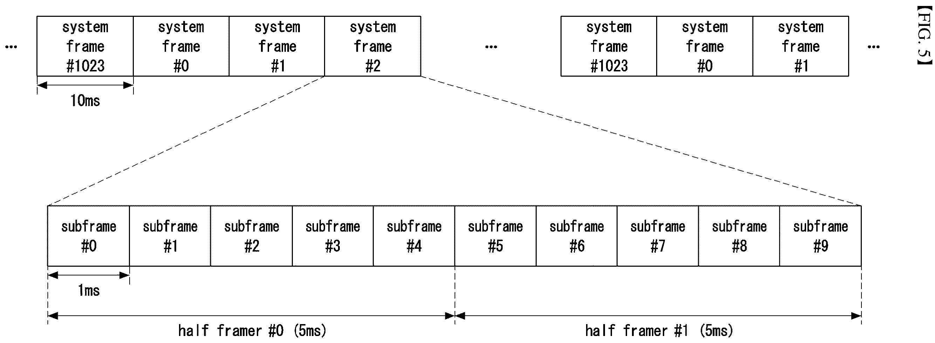

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

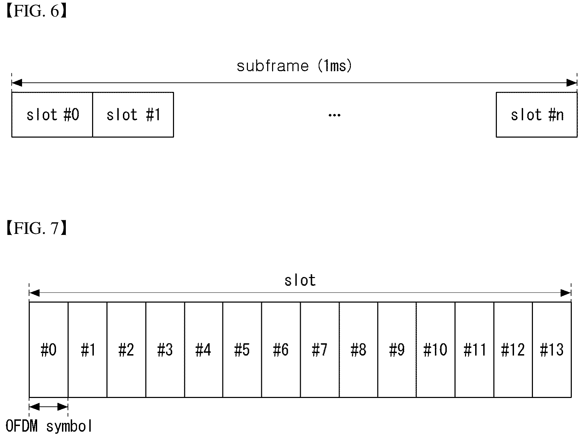

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

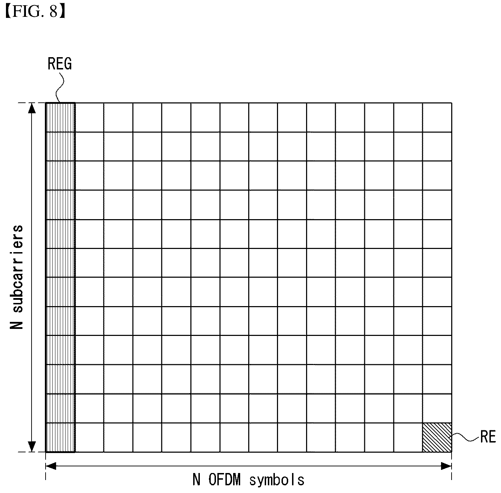

FIG. 8 is a conceptual diagram illustrating exemplary embodiments of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g. NR communication system, 5G communication system, or 6G communication system) may support use scenarios such as enhanced Mobile BroadBand (eMBB), Ultra Reliable Low Latency Communication (URLLC), and massive Machine Type Communication (mMTC). The communication system (e.g. communication network) may support a transmission and reception point (TRP) technology (e.g. multi-TRP (mTRP) technology and/or single TRP (sTRP) technology). The communication system supporting the TRP technology may be referred to as a TRP system (e.g. mTRP system and/or sTRP system). In the present disclosure, 'TRP' may have a meaning including 'sTRP' and/or 'mTRP', and 'TRP' may refer to 'sTRP' or 'mTRP' depending on a context. A TRP may refer to an antenna set, antenna group, and/or antenna array. A TRP may be associated with a CORESET and/or a beam (e.g. beam group).

The mTRP technology may fall under a category of MIMO technology. The mTRP may have characteristics (e.g. cell-level characteristics) of macro cells, small cells, pico cells, and/or femto cells. The mTRP may perform data transmission for a terminal. In a case where a channel (e.g. link) with a non-uniform channel condition exists due to an obstacle and/or interference, the mTRP may mitigate the effect caused by the obstacle and/or interference. The mTRP may improve a data transmission rate for a terminal located in a cell edge.

mTRP-based communication may be performed based on a coherent joint transmission (CJT) scheme or a non-coherent joint transmission (NCJT) scheme. In the CJT scheme, a base station may be aware of channel information between each TRP and a terminal and may perform a preprocessing operation for data based on the channel information. In this case, an overhead caused by a transmission procedure of the channel information may increase, and synchronization constraints among the TRPs may occur. In the NCJT scheme, a base station may not need to be aware of channel information between each TRP and a terminal. The mTRP may transmit data to the terminal without performing a preprocessing operation such as phase compensation. The complexity of the NCJT scheme may be lower than the complexity of the CJT scheme.

NCJT-based mTRP communication may be performed based on a single-DCI scheme or a multi-DCI scheme. In the single-DCI scheme, PDSCHs transmitted by mTRP may be scheduled by a single DCI. The single DCI may be transmitted by one TRP of the mTRP. In the multi-DCI scheme, a PDSCH transmitted by each TRP may be scheduled by a DCI transmitted by the corresponding TRP. For example, a first PDSCH transmitted by a first TRP may be scheduled by a first DCI transmitted by the first TRP, and a second PDSCH transmitted by a second TRP may be scheduled by a second DCI transmitted by the second TRP. In other words, a plurality of PDSCHs may be scheduled using a plurality of DCIs.

In the single-DCI scheme, a terminal may expect to receive PDSCHs transmitted by different TRPs through different layers while using the same time and frequency resource. Alternatively, the terminal may expect to receive PDSCHs transmitted by different TRPs through different time resources (e.g. different time regions) while using the same frequency resource and the same layer. Alternatively, the terminal may expect to receive PDSCHs transmitted by different TRPs through different frequency resources (e.g. different frequency regions) while using the same time resource and the same layer.

In the multi-DCI scheme, PDSCH scheduling for each TRP may be performed by an individual DCI. PDSCHs scheduled by a plurality of DCIs may be fully overlapped or partially overlapped. Alternatively, PDSCHs scheduled by a plurality of DCIs may not be overlapped. In both the single-DCI scheme and the multi-DCI scheme, the DCI may include transmission configuration indicator (TCI) state information for PDSCH(s).

An indication/configuration of a TCI state for a terminal may be interpreted as an indication/configuration of a beam (e.g. a transmission beam and/or a reception beam). In other words, the TCI state may have a meaning corresponding to the beam. From the perspective of downlink (DL) communication, configuration of a TCI state may refer to configuration of a quasi-co-location (QCL). From the perspective of uplink (UL) communication, configuration of a TCI state may refer to configuration of a spatial filter. A unified TCI state may indicate (e.g. configure) a common beam regardless of DL communication and UL communication. Alternatively, a unified TCI state may indicate (e.g. configure) a common beam for each of DL communication and UL communication. The unified TCI may be referred to as 'UTCI'.

To enhance the reliability and/or robustness of mTRP communication, improvements such as PDCCH enhancements may be applied. Deployment scenarios for PDCCH enhancement may be classified into a single frequency network (SFN) and a non-SFN.

In the SFN scheme, different TRPs or different panels may transmit the same PDCCH using the same resource (e.g. the same time resource, the same frequency resource, and/or the same spatial resource). In other words, all TRPs or all panels may transmit the PDCCH using the same DMRS configuration, the same DMRS position, and/or the same DMRS sequence. In this case, from the reception perspective for the TRPs or panels, TCI states may be implicitly configured differently. The above-described exemplary embodiment may be performed based on a plurality of TCI states of a CORESET. Synchronization constraints for an ideal backhaul or a near-ideal backhaul among the TRPs may exist.

In the NSFN scheme, PDCCHs generated by the respective TRPs may be multiplexed in the time domain and/or the frequency domain, and the multiplexed PDCCHs may be transmitted to the terminal. This scheme may be an mTRP-based PDCCH repetition scheme. In the NSFN scheme, the number of encoded bits equal to the number of bits delivered through one PDCCH generated in each TRP may be divided among the TRPs, and the TRP-specific bits (e.g. encoded bits) may be transmitted through a different PDCCH candidate for each TRP. This scheme may correspond to an sTRP-based PDCCH transmission scheme.

In the mTRP-based PDCCH repetition scheme, a PDCCH may be duplicated according to the number of TRPs, and the PDCCHs may be transmitted in the same search spaces (e.g. search spaces having the same index) within different search space sets, each having the same number of PDCCH candidates. In this case, the search space sets may exist within the same CORESET or within different CORESETs. Since one TCI state may be associated with each CORESET, when PDCCHs are transmitted from different search spaces within the same CORESET, only one TCI state for the PDCCHs transmitted from the different search spaces may be indicated (e.g. configured). In this case, the terminal may receive one PDCCH from one TRP at a specific time.

When the PDCCHs are transmitted from the same search spaces within different CORESETs, the terminal may implicitly expect to receive the PDCCH from sTRP or mTRP depending on the number of TCI states (e.g. TCI states indicated or configured by the base station). In this case, a single PDCCH may be divided into as many PDCCHs as the number of TRPs, and the divided PDCCHs may be transmitted in different PDCCH candidates. In this case, an aggregation level and a combined aggregation level may be the same. In the above exemplary embodiment, the PDCCH candidates may be allocated to different CORESETs. A payload size for a combination of finally distributed PDCCHs may be the same as a payload size of a PDCCH transmitted from sTRP. Accordingly, in terms of decoding complexity, the sTRP-based PDCCH transmission scheme may be more advantageous than the mTRP-based PDCCH repetition scheme.

A terminal may perform mTRP communication or sTRP communication with a base station. The mTRP communication between the terminal and the base station may be performed via mTRP associated with the base station. The sTRP communication between the terminal and the base station may be performed via sTRP associated with the base station. The mTRP communication may be referred to as first TRP communication, and the sTRP communication may be referred to as second TRP communication. Alternatively, the mTRP communication may be referred to as second TRP communication, and the sTRP communication may be referred to as first TRP communication. The expression 'A terminal performs first TRP communication with a base station' may mean that the terminal performs mTRP communication or sTRP communication with the base station via one or more TRPs associated with the base station. The expression "A terminal performs second TRP communication with a base station" may mean that "the terminal performs sTRP communication or mTRP communication with the base station via one or more TRPs associated with the base station".

In a communication system, a united TCI framework may be supported. A base station may transmit information of a pool (e.g. pool list) of TCI states to a terminal using RRC signaling. The terminal may receive the information of the pool (e.g. pool list) of TCI states through the RRC signaling of the base station. The base station may configure type information of TCI states for the terminal. The type information may indicate a joint DL/UL beam indication or a separate DL/UL beam indication. The joint DL/UL beam indication may be referred to as 'joint indication' or 'joint type'. The separate DL/UL beam indication may be referred to as 'separate indication' or 'separate type'.

When the joint type (e.g. joint indication) is configured, a TCI state (e.g. one TCI state) for DL and UL may be configured. In other words, a DL TCI state configuration and a UL TCI state configuration may be the same. The terminal may expect that a TCI state indicated by an information element included in PDSCH configuration information is applied to both DL (e.g. DL signal/channel) and UL (e.g. UL signal/channel). The term 'signal/channel' may refer to a signal and/or a channel. When the separate type (e.g. separate indication) is configured, TCI states for DL and UL, respectively, may be configured. In other words, a DL TCI state configuration may be distinguished from a UL TCI state configuration. The terminal may expect that a UL TCI state indicated by an information element included in UL BWP configuration information is applied to UL (e.g. UL signal/channel). A UL signal/channel may include PUSCH, PUCCH, and/or SRS.

After the pool (e.g. pool list) of TCI states is configured (e.g. indicated) by RRC signaling, the base station may indicate TCI state(s) (e.g. application of the TCI state(s)) using DCI (e.g. DCI signaling). Due to the constraint of the DCI size (e.g. bits of DCI fields), the base station may preferentially activate candidate TCI state(s) using MAC signaling (e.g. MAC CE signaling). In other words, candidate TCI states, up to a certain number (e.g. a maximum number) that can be indicated or configured through DCI, may be preferentially activated by a MAC CE.

For the activated candidate TCI state(s), DCI may include a codepoint corresponding to a single TCI state or two TCI states according to a TCI state type (e.g. joint type or separate type). When the joint type is configured, a codepoint corresponding to a single TCI state may be delivered by the DCI. When the separate type is configured, a codepoint corresponding to two TCI states may be delivered by the DCI.

In an mTRP system, up to two TRPs may be considered, and when separate types are configured, a base station may indicate (e.g. configure) up to four TCI states to a terminal. The unified TCI framework for sTRP may be extended to mTRP. In single-DCI-based mTRP communication and/or multi-DCI-based mTRP communication, detailed operations and/or signaling procedures for communication nodes (e.g. base station, TRP, and terminal) need to be defined. For extension of the unified TCI framework in mTRP communication, extension of the unified TCI framework for all DL channels and/or all UL channels that can be used in the RRC connected state may be considered.

In a communication system supporting the unified TCI framework, for PDSCH reception, a terminal may identify TCI state indication information (e.g. a TCI field or a TCI selection field) included in DCI, and may expect to receive PDSCH by applying TCI state(s) indicated by the DCI after a configured time duration (e.g. beam application time (BAT)). For reception of PDSCH located before the BAT, a TCI selection field may be introduced. The TCI selection field may be included in the DCI. In other words, TCI state(s) for reception of PDSCH located before the BAT may be dynamically indicated by the DCI. The terminal may expect to receive PDSCH before the BAT based on the TCI selection field.

Regardless of whether the TCI selection field exists in DCI, a capability for PDSCH reception (e.g. beam configuration for PDSCH reception) may differ for each terminal. For example, a capability related to reception of PDCCH scheduling PDSCH, decoding of information delivered through PDCCH, and/or reception beam configuration for PDSCH based on decoded information may differ for each terminal. Since a time (e.g. a minimum time) required for TCI state application in single DCI-based mTRP communication may differ for each terminal, a rule for reception beam configuration of PDSCH may be required.

In relation to extension of the unified TCI framework in mTRP communication, the base station may dynamically indicate (e.g. configure) TCI state(s) used for PUCCH transmission to the terminal. For configuration of TCI state(s), a relationship between PUCCH resource and TRP may be explicitly or implicitly indicated. In single-DCI-based mTRP communication and/or multi-DCI-based mTRP communication, a transmission beam of the terminal used for PUCCH transmission may be indicated (e.g. configured). Methods for indicating (e.g. configuring) a beam (e.g. a TCI state or QCL) for transmission and reception of a DL channel, DL signal, UL channel, and/or UL signal may be required. A DL channel may refer to a DL data channel and/or a DL control channel. A UL channel may refer to a UL data channel and/or a UL control channel. Each of a DL signal and a UL signal may include a reference signal. In addition, a DL signal may refer to a synchronization signal. A DL signal may refer to a DMRS, a CSI-RS, an SSB, and the like. A UL signal may refer to an SRS and the like.

In the present disclosure, a DL channel may be interpreted as encompassing not only a DL channel itself but also a DL signal, a DL signal may be interpreted as encompassing not only a DL signal itself but also a DL channel, a UL channel may be interpreted as encompassing not only a UL channel itself but also a UL signal, and a UL signal may be interpreted as encompassing not only a UL signal itself but also a UL channel.

To identify a DL channel state, SSB and/or CSI-RS may be used. SSB may be periodically transmitted for time synchronization between a terminal and a base station. SSB may be transmitted without a transmission request (e.g. a transmission requirement). Therefore, transmission overhead of SSB may be smaller than transmission overhead of CSI-RS. SSB may be transmitted within a specific frequency region. Due to a constraint of a transmission frequency region, SSB may not be used to identify a channel state for a frequency region to be measured by the terminal and/or a frequency region supported in the entire system. In channel state measurement, SSB and CSI-RS may have advantages and disadvantages, respectively. According to a specific environment and/or condition, SSB or CSI-RS may be used for measurement (e.g. identification) of a DL channel state.

Channel state reports (e.g. CSI reports) may be classified into three types. For example, channel state reports may be classified into a periodic channel state report, a semi-persistent channel state report, and an aperiodic channel state report. In periodic channel state reporting (e.g. periodic CSI reporting), the terminal may transmit a channel state report to the base station according to a periodicity configured by the base station. In semi-persistent channel state reporting (e.g. semi-persistent CSI reporting), the terminal may transmit a channel state report to the base station during a certain duration. In aperiodic channel state reporting (e.g. aperiodic CSI reporting), the terminal may transmit a channel state report to the base station according to a request (e.g. CSI request) of the base station. In other words, the aperiodic channel state report may be transmitted intermittently.

A channel state report may include precoding matrix indicator (PMI), rank indicator (RI), layer indicator (LI), channel quality indicator (CQI), CSI reference resource indicator (CRI), SS/PBCH block resource indicator (SSBRI), reference signal received power (RSRP), and/or signal to interference plus noise ratio (SINR). A channel state report may include a capability index. A channel state report may include up to eight information items. For channel state measurement, CSI-RS may be used. The base station may transmit an RRC message including resource information of CSI-RS (e.g. *CSI-ResourceConfig* or *CSI-MeasConfig*) to the terminal. The terminal may receive the RRC message from the base station and may obtain the resource information of CSI-RS included in the RRC message.

The resource information of CSI-RS may include at least one of a time resource in which CSI-RS is transmitted, a frequency resource in which CSI-RS is transmitted, a transmission periodicity of CSI-RS, or a resource type of CSI-RS (e.g. a periodic type, a semi-persistent type, or an aperiodic type). In addition, the RRC message may include configuration information for CSI measurement reporting (e.g. *CSI-ReportConfig*). The type of CSI-RS resource and the type of CSI reporting (e.g. CSI measurement reporting) may be independently configured. For example, when aperiodic CSI reporting is required, the terminal may perform measurement on all CSI-RS resources regardless of periodic CSI-RS resources, semi-persistent CSI-RS resources, and aperiodic CSI-RS resources, and may transmit an aperiodic CSI report including measurement results to the base station. As another example, when periodic CSI reporting is required, the terminal may perform measurement on periodic CSI-RS resources and may transmit a periodic CSI report including measurement results to the base station. As still another example, when semi-persistent CSI reporting is required, the terminal may perform measurement on periodic CSI-RS resources and/or semi-persistent CSI-RS resources and may transmit a semi-persistent CSI report including measurement results to the base station.

Resource configuration of CSI-RS may have a hierarchical structure. In other words, CSI-RS resources may be hierarchically configured. To represent factors for obtaining minimal channel information, a set of RE(s) having a specific pattern in the time and frequency domains may be referred to as a resource. To indicate (e.g. configure) a set of resources at once, a resource set may be defined. To identify each of a resource and a resource set, a separate ID may be assigned. Different resource sets may include different resources. Alternatively, different resource sets may include the same resource(s). To variably utilize resources and resource sets, one group (e.g. a resource set list) including resource sets may be configured, and one group may be defined based on resource configuration information (e.g. *CSI-ResourceConfig*)*.* A specific ID for a set (e.g. a resource set list) of resource sets may be configured.

To distinguish between a resource configuration indicating a set of CSI-RS resource sets and a resource configuration indicating time and/or frequency resources themselves, a set of CSI-RS resource sets may be defined as a 'CSI-RS resource set list' or a 'set list'. In the present disclosure, 'periodic' may be abbreviated as 'P', 'semi-persistent' may be abbreviated as 'SP', and 'aperiodic' may be abbreviated as 'AP'. In other words, periodic CSI-RS, semi-persistent CSI-RS, and aperiodic CSI-RS may be referred to as P CSI-RS, SP CSI-RS, and AP CSI-RS, respectively, and periodic CSI report, semi-persistent CSI report, and aperiodic CSI report may be referred to as P CSI report, SP CSI report, and AP CSI report, respectively. CSI-RS resource(s) for each type (e.g. P, SP, or AP) may be configured in units of a CSI-RS resource set list. CSI-RS resource set(s) and/or CSI-RS resource(s) belonging to the same CSI-RS resource set list may be interpreted as having the same type. Since a CSI-RS resource set list is configured per type, a CSI report may be requested or transmitted per CSI-RS resource set list. CSI-RS resource configuration may have a hierarchical structure in an order of a CSI-RS resource, a CSI-RS resource set, and a CSI-RS resource set list. One or more CSI-RS resources may belong to a CSI-RS resource set, and one or more CSI-RS resource sets may belong to a CSI-RS resource set list.

Configuration information for CSI reporting may be transmitted to the terminal together with configuration information of CSI-RS resources. Depending on a purpose of CSI measurement (e.g. channel measurement or interference measurement), configuration information (e.g. allocation information) for different CSI-RS resource set lists may be transmitted to the terminal. The Configuration information for CSI reporting may include all information required for the terminal to transmit a CSI report. For example, Configuration information for CSI reporting may include at least one of a CSI reporting type (e.g. P, SP, or AP), time resources for which CSI measurement is required, frequency resources for which CSI measurement is required, or types of information to be included in the CSI report. According to a size of a CSI report, a channel through which the CSI report is transmitted may differ. For example, a P CSI report may be transmitted through a PUCCH. An SP CSI report may be transmitted through a PUCCH or a PUSCH. An AP CSI report may be transmitted through a PUSCH. A size of an AP CSI report may be larger than a size of an SP CSI report, and a size of an SP CSI report may be larger than a size of a P CSI report.

A CSI reporting procedure per type may be performed as follows. The base station may transmit an RRC message including configuration information of CSI measurement, configuration information of CSI-RS resources, and/or Configuration information for CSI reporting to the terminal. The terminal may obtain the configuration information of CSI measurement, configuration information of CSI-RS resources, and/or Configuration information for CSI reporting from the base station. In a P CSI reporting procedure, the terminal may measure a DL channel based on P CSI-RS without separate triggering signaling (e.g. triggering signal), and may transmit a CSI report including measurement results to the base station according to a CSI reporting periodicity configured by RRC signaling (e.g. RRC message).

In an SP CSI reporting procedure, the base station may transmit information (e.g. MAC CE) indicating activation of SP CSI measurement/reporting to the terminal. When SP CSI measurement/reporting is activated, the terminal may measure a DL channel based on SP CSI-RS, and may transmit a CSI report including measurement results to the base station according to a CSI reporting periodicity configured by RRC signaling (e.g. RRC message). A transmission operation of the CSI report may be performed until information (e.g. MAC CE) indicating deactivation of SP CSI measurement/reporting is received from the base station. For the SP CSI reporting procedure, activation signaling and/or deactivation signaling for the SP CSI measurement/reporting may be required. In a duration between the activation signaling and the deactivation signaling, the terminal may measure a DL channel based on SP CSI-RS, and may transmit a CSI report including measurement results to the base station.

In an AP CSI reporting procedure, the base station may transmit a signaling message (e.g. DCI or MAC CE) for triggering AP CSI measurement/reporting to the terminal. The signaling message may indicate a single CSI report. The terminal may receive the signaling message from the base station and may identify that AP CSI measurement/reporting is triggered based on the signaling message. An AP CSI-RS resource measured by the terminal may be an AP CSI-RS resource located after N slots from a slot in which the signaling message triggering AP CSI measurement/reporting is received, and an AP CSI report may be transmitted after M slots from the slot in which the signaling message triggering the AP CSI measurement/reporting is received. Each of N and M may be a natural number. Information on N slots indicating the AP CSI-RS resource and/or information on M slots indicating a timing of AP CSI reporting may be transmitted to the terminal through RRC signaling. The information on N slots indicating the AP CSI-RS resource and/or the information on M slots indicating the timing of AP CSI reporting may be transmitted to the terminal together with the configuration information of CSI measurement, configuration information of CSI-RS resources, and/or Configuration information for CSI reporting.

In the present disclosure, an AP CSI measurement/reporting procedure is described. Methods proposed for the AP CSI measurement/reporting procedure may be applied in the same or a similar manner to a P CSI measurement/reporting procedure and/or an SP CSI measurement/reporting procedure. CSI reporting may refer to an operation of reporting channel information measured based on CSI-RS. CSI-RS may be interpreted as a CSI-RS resource used for channel measurement depending on a context. PDCCH may be interpreted as a PDCCH resource depending on a context, and PDSCH may be interpreted as a PDSCH resource depending on a context.

In an AP CSI measurement/reporting procedure, a signaling message (e.g. triggering signal) for triggering AP CSI measurement/reporting may be required. The triggering signal may be transmitted through PDCCH. The triggering signal may be DCI including a CSI request (e.g. a CSI request field). A numerology (e.g. subcarrier spacing (SCS)) for the PDCCH through which the triggering signal is transmitted may be the same as a numerology for a corresponding CSI-RS (e.g. a transmission resource of the CSI-RS). Alternatively, a numerology for the PDCCH through which the triggering signal is transmitted may be different from a numerology for the CSI-RS.

An AP CSI report (e.g. AP CSI measurement/reporting) may be triggered by DCI. A triggering state delivered through the DCI may be mapped to one codepoint. Information on an AP trigger state list that is mapped to codepoints may be delivered to the terminal through RRC signaling (e.g. *CSI-AperiodicTriggerStateList*). The AP trigger state list may include TCI state information configured in units of a CSI-RS resource, a CSI-RS resource set, or a CSI-RS resource set list. A TCI state (e.g. a first indicated TCI state or a second indicated TCI state) indicated by the AP trigger state list may be applied to receive (e.g. measure) AP CSI-RS in a CSI-RS resource, a CSI-RS resource set, or a CSI-RS resource set list associated with the AP trigger state list.

Configuration information for CSI reporting (e.g. AP CSI reporting) may include information per CSI-RS resource, CSI-RS resource set, or CSI-RS resource set list. A state (e.g. TCI state) applied to a CSI-RS resource set list may be interpreted as being the same as a state (e.g. a state belonging to an AP trigger state list) mapped to a codepoint. An AP trigger state list may be associated with a group of CSI-RS resource set list(s). A set of candidates for indicating AP CSI reporting may be composed of a plurality of CSI-RS resource set lists. When a number of states indicated by RRC signaling is greater than a number of states (e.g. triggering states or TCI states) indicated by bits in DCI, a MAC CE indicating states that can be indicated by the DCI within the candidate set may be transmitted, and the bits in the DCI may indicate one or more states among the states indicated by the MAC CE. In other words, a part selection procedure using a MAC CE may be supported.
**1. Scenario #1:** A numerology of a PDCCH through which DCI triggering AP CSI measurement/reporting is delivered may be the same as a numerology of a CSI-RS (e.g. AP CSI-RS resource). Proposed methods #1 to #9 below may be applied in Scenario #1.

### - Proposed Method #1

In an sTRP system (e.g. sTRP communication), a terminal may expect to receive a request for at most one AP CSI report within one slot per cell or per base station. In an mTRP system (e.g. mTRP communication), a terminal may receive requests for AP CSI reports corresponding to a maximum number of TRPs supported within one serving cell, for channel measurement of different TRPs. Beams (e.g. TCI states or QCL configurations) for CSI-RSs transmitted through different TRPs may be differently configured. Since a terminal having a single panel is unable to generate a plurality of beams (e.g. different beams) within one time duration, the terminal is unable to receive CSI-RSs from a plurality of TRPs. Accordingly, when beam configurations (e.g. TCI states) are different in the same time duration (e.g. overlapping time duration), the terminal (e.g. terminal having a single panel) may not expect reception of CSI-RSs in the same time duration. When the same beam (e.g. one beam) is configured in the same time duration (e.g. overlapping time duration), the terminal (e.g. terminal having a single panel) may expect reception of CSI-RSs in the same time duration.

The base station may allow only one beam configuration for a CSI-RS associated with each TRP existing within the same time duration (e.g. overlapping time duration). For example, when a beam configuration for CSI-RS #4 associated with TRP #1 is TCI state #2, a beam configuration for CSI-RS #3 associated with TRP #2 is TCI state #1, and CSI-RS #4 and CSI-RS #3 exist within the same time duration, the base station may indicate one TRP, one CSI-RS (e.g. CSI-RS resource, CSI-RS resource set, or CSI-RS resource set list), and/or one TCI state to the terminal for reception of CSI-RSs in the same time duration. The one TRP, one CSI-RS, and/or one TCI state may be indicated in a bitwise manner or by using a bitmap. For example, in a bitwise manner or by using a bitmap, TRP IDs may be sorted in ascending order or descending order, and the base station may indicate to the terminal, by using a specific bit, reception of CSI-RS through a specific TRP.

As another example, in a bitwise manner or by using a bitmap, CSI-RS IDs (e.g. CSI-RS resource IDs, CSI-RS resource set IDs, or CSI-RS resource set list IDs) may be sorted in ascending order or descending order, and the base station may indicate reception of a specific CSI-RS to the terminal by using a specific bit. As still another example, in a bitwise manner or by using a bitmap, TCI state IDs may be sorted in ascending order or descending order, and the base station may indicate reception of CSI-RS based on a specific TCI state to the terminal by using a specific bit.

The terminal may transmit channel information (e.g. CSI report) including a parameter (e.g. TRP ID) enabling per-TRP discrimination to the base station. The base station may receive channel information from the terminal and may identify parameter(s) included in the channel information. The terminal may transmit, to the base station, information (e.g. UE capability information) indicating whether support for a specific function (e.g. a type of CSI measurement/reporting) is provided. The base station may receive the UE capability information from the terminal. The base station may request an AP CSI report from the terminal based on the UE capability information. In other words, the base station may request, from the terminal, a type of CSI reporting supported by the terminal.

### - Proposed Method #2

Within one slot, CSI requesting (e.g. CSI reporting request) and CSI reporting may be performed. A CSI request may be transmitted from a first cell (or a first TRP), and a CSI report may be transmitted to the first cell (or the first TRP). In other words, CSI requesting and CSI reporting may be performed for the same cell (or the same TRP). The CSI report may include measurement results according to the CSI request. As another method, a CSI request may be transmitted from a first cell (or a first TRP), and a CSI report may be transmitted to a second cell (or a second TRP). In other words, CSI requesting and CSI reporting may be performed for different cells (or different TRPs).

When a slot in which a CSI request is transmitted and a slot in which a CSI report is transmitted are different, CSI requesting and the CSI reporting may be inefficient in terms of latency. Therefore, CSI reporting and CSI requesting may be performed within the same slot. CSI reporting and CSI requesting performed within the same slot may be limited to CSI reporting and CSI requesting performed for different cells (or different TRPs). A CSI report may be transmitted after a time (e.g. a gap) required for beam switching from a time at which a CSI request is received.

The terminal may transmit, to the base station, information indicating whether support for an operation of receiving a CSI request and transmitting a CSI report within the same slot (hereinafter, an in-slot CSI requesting/reporting) is provided. The base station may identify, based on the information received from the terminal, whether in-slot CSI requesting/reporting is supported by the terminal, and may transmit a CSI request (e.g. AP CSI request) to the terminal based on the identified information. When in-slot CSI requesting/reporting is supported by the terminal, the base station may transmit an in-slot CSI request to the terminal. When in-slot CSI requesting/reporting is not supported by the terminal, the base station may not transmit an in-slot CSI request to the terminal.

### - Proposed Method #3

A terminal may transmit, to a base station, information indicating whether support for a CSI measurement operation based on cell-based BWP switching is provided, and information indicating whether support for a CSI measurement operation based on TRP-based BWP switching is provided. The terminal may transmit, to the base station, at least information indicating whether support for a CSI measurement operation based on intra-TRP BWP switching is provided. The base station may enable or disable TRP-based BWP switching based on the information received from the terminal.

When only a CSI measurement operation based on cell-based BWP switching is supported, CSI measurement configuration may be commonly applied to a plurality of TRPs existing within a cell. Accordingly, a degree of freedom for CSI measurement may be reduced. Information (e.g. CSI request) triggering CSI reporting per TRP may be delivered through DCI, and the last symbol (or a start symbol) of a PDCCH through which the DCI is transmitted may exist after the last slot of a PDCCH through which information indicating BWP switching is transmitted. When the last symbol (or the start symbol) of the PDCCH through which the DCI including the information (e.g. CSI request) triggering CSI reporting per TRP is transmitted does not exist after the last slot of the PDCCH through which the information indicating BWP switching is transmitted, the terminal may ignore the information triggering CSI reporting per TRP.

### - Proposed Method #4

In mTRP communication, a CSI request may be delivered through single DCI or multiple DCI. When a CSI request in mTRP communication is delivered through single DCI, a number of bits indicating CSI requests for mTRP (e.g. two TRPs) may be twice a number of bits indicating a CSI request for sTRP. A minimum size of a CSI request field indicating CSI request(s) may be 0 bits, and a maximum size of the CSI request field may be 6 bits. Considering mTRP, a minimum size of the CSI request field may be 0 bits, and a maximum size of the CSI request field may be 12 bits. Bits of the CSI request field for each TRP in mTRP may be independent. Information on bits for the CSI request field may be transmitted to the terminal through RRC signaling together with CSI configuration information. The size of the CSI request field (e.g. information triggering CSI reporting) may be individually configured per TRP.

### - Proposed Method #5

Considering mTRP, a base station may transmit, to a terminal, a MAC CE including information on a subset for an aperiodic trigger state list. The MAC CE may be used for selection of a part for the aperiodic trigger state. The terminal may receive the MAC CE from the base station and may identify the information included in the MAC CE. In this case, the terminal may transmit a HARQ response at the same HARQ-ACK feedback timing. A reference for the HARQ-ACK feedback timing may be a slot in which a PDSCH carrying the MAC CE for the part selection is located. The reason is that a decoding operation and/or an update operation for information (e.g. the MAC CE) for the part selection is a common application matter for mTRP.

A payload of the MAC CE for the part selection may be distinguished per TRP. For example, the MAC CE may include a first payload for a first TRP and a second payload for a second TRP. Configuration of the payload of the MAC CE may be associated with allocation of a CSI request field (e.g. CSI request bits) per TRP in Proposed Method #4. CSI-RS (e.g. candidate CSI-RS) for CSI measurement (e.g. CSI request or CSI report) triggered by DCI may differ per TRP. In this case, a field of the DCI (e.g. CSI request field) and/or CSI-RS may be used in an implementation-specific manner.

HARQ-ACK feedbacks for CSI requests may be delivered based on different time units. Time information for the HARQ-ACK feedbacks may be transmitted within a PDCCH carrying the CSI requests. In other words, DCI including the CSI requests may include time information for the HARQ-ACK feedbacks. Within the PDCCH (e.g. DCI), the time information for the HARQ-ACK feedbacks and the CSI requests may be distinguished. A size of a CSI request field #1 and a size of a CSI request field #2 may each be 6 bits, and the CSI request fields may be transmitted in an order of the CSI request field #1 and the CSI request field #2. In this case, a HARQ-ACK feedback #1 for the CSI request field #1 and a HARQ-ACK feedback #2 for the CSI request field #2 may be transmitted in an order of the CSI request field #1 and the CSI request field #2. In other words, when different CSI triggering messages (e.g. different CSI request fields) exist within the same DCI, HARQ-ACK responses for the different CSI triggering messages may be transmitted at different times. The reason is that CSI-RSs exist in different resources (e.g. different time and/or frequency resources). In addition, in order to avoid overlapping of reception beams, when different CSI triggering messages exist within the same DCI, HARQ-ACK responses for the different CSI triggering messages may be transmitted at different times. The CSI triggering message may correspond to each CSI request field.

### - Proposed Method #6

CSI-RSs that are measurement targets may be different for the respective TRPs. A resource configuration of CSI-RS may be different for each TRP, and a CSI reporting configuration may be different for each TRP. A CSI-RS resource set list may be indicated (e.g. configured) for each TRP, and the CSI-RS resource set list may be configured differently for each TRP. The CSI reporting configuration may be performed individually. For example, CSI-RS resources, CSI-RS resource sets, or CSI-RS resource set lists required for CSI reporting may be independently configured for the respective TRPs. In other words, CSI-RS resources, CSI-RS resource sets, or CSI-RS resource set lists for each of mTRP may be configured.

IDs required for resource configuration or CSI reporting may be shared between TRPs. For example, when CSI-RS resource sets #3, #5, and #7 are associated with a CSI reporting configuration #1, the base station may indicate (e.g. configure) to the terminal that the CSI reporting configuration #1 is applied to both TRPs. In this case, the terminal may perform a reception operation and/or a measurement operation on the CSI-RS resource sets #3, #5, and #7 associated with the CSI reporting configuration #1, and may transmit a CSI report including measurement results to the base station.

As another method, a resource configuration of CSI-RS may be common for mTRP, and resources required for CSI reporting may be configured for each TRP. CSI-RSs for CSI reporting (or resources for CSI report transmission) may be configured differently (e.g. independently) for each TRP. QCL information for each CSI-RS resource set associated with a codepoint for a CSI request (e.g. CSI request field) of DCI may be delivered to the terminal through RRC signaling. The QCL information may be identically configured for all CSI-RS resources belonging to the CSI-RS resource set.

QCL information for a plurality of CSI-RS resource sets may be configured with one CSI reporting configuration ID. In this case, for flexible use of resources, the CSI reporting configuration ID may be configured for each TRP. Alternatively, to reduce signaling overhead, the CSI reporting configuration ID may be commonly applied to all TRPs. A triggering state may be indicated (e.g. configured) differently for each TRP. The triggering state may be indicated (e.g. configured) by DCI. CSI-RS resource sets for each TRP of mTRP and QCL information related to the CSI-RS resource sets may be independently configured by RRC signaling.

### - Proposed Method #7

When a gap (e.g. offset) between the last symbol (e.g. an end symbol) of a PDCCH through which a CSI request (e.g. DCI including the CSI request) is transmitted and the first symbol (e.g. a start symbol) of a CSI-RS is smaller than a threshold, a terminal supporting a default beam operation may perform the default beam operation. A default beam may follow a QCL configuration (e.g. TCI state) for a CSI-RS resource, a CSI-RS resource set, or a CSI-RS resource set list configured by RRC signaling. A terminal not supporting a default beam operation may maintain (e.g. use) a QCL configuration (e.g. a TCI state) for a previous CSI-RS resource, a previous CSI-RS resource set, or a previous CSI-RS resource set list.

The terminal may perform a reception operation (e.g. measurement operation) for CSI-RS by utilizing QCL information of CORESET #0. When a DL signal (e.g. PDSCH, PDCCH, reference signal, or SSB) associated with the CSI-RS exists, the terminal may perform a reception operation (e.g. measurement operation) for the CSI-RS by utilizing QCL information (e.g. TCI state) for the DL signal. The DL signal may be interpreted as a DL signal or a DL channel depending on a context. Alternatively, the DL signal may be interpreted as encompassing a DL signal and a DL channel depending on a context. The terminal may perform a reception operation (e.g. measurement operation) for the CSI-RS by utilizing QCL information (e.g. TCI state) for a DL signal (e.g. a recent DL signal) associated with information (e.g. a CORESET ID or a TRP ID) for distinguishing a TRP for each CSI-RS.

The terminal may expect to perform a reception operation for the CSI-RS based on a TCI selection field (or TCI field) indicating TCI state information for PDSCH. Alternatively, the terminal may perform a reception operation for the CSI-RS based on configuration information of an SRS resource indicator indicating TCI state information for PUSCH. Proposed Method #7 may be applied when no other DL signal exists in a symbol in which the CSI-RS is located.

### - Proposed Method #8

When a CSI-RS resource (e.g. a triggered CSI-RS resource) overlaps with a resource of another DL signal, a beam configuration (e.g. TCI configuration or QCL configuration) for a terminal may be required. CSI-RS may be used to measure a current channel state and/or interference. A priority of CSI-RS may be lower than a priority of another DL signal (e.g. PDSCH, PDCCH, DMRS, SSB, PT-RS, or another CSI-RS). Therefore, for reception (e.g. measurement) of CSI-RS, a QCL configuration (e.g. TCI configuration or QCL configuration) for another DL signal may be applied.

SSB may be used for synchronization. A priority of SSB may be higher than a priority of CSI-RS. SSB may be transmitted periodically. Transmission of SSB may be performed in a duration not adjacent to another signal (e.g. another DL signal). Transmission of SSB may be performed in a duration not overlapping with another signal (e.g. another DL signal). When CSI-RS and 'PDSCH and/or DMRS (e.g. DMRS for the PDSCH)' exist in the same time resource (e.g. the same symbol), the terminal may determine (e.g. estimate or expect) that QCL (e.g. TCI state) for the CSI-RS follows QCL (e.g. TCI state) for the 'PDSCH and/or DMRS (e.g. DMRS for the PDSCH)'. When CSI-RS and 'PDCCH and/or DMRS (e.g. DMRS for the PDCCH)' exist in the same time resource (e.g. the same symbol), the terminal may determine (e.g. estimate or expect) that QCL (e.g. TCI state) for the CSI-RS follows QCL (e.g. TCI state) for the 'PDCCH and/or DMRS (e.g. DMRS for the PDCCH)'.

Depending on conditions, environments, and/or implementations, a time resource (e.g. symbol) in which the DL signal is located may be different from a time resource in which the CSI-RS is located. In this case, Proposed Method #8 may not be applied. In other words, the terminal may apply QCL (e.g. TCI state) for the DL signal located in a first symbol in order to perform a reception operation (e.g. measurement operation) for the CSI-RS in the first symbol, and may not apply QCL (e.g. TCI state) for the DL signal located in another symbol (e.g. a second symbol) other than the first symbol in order to perform a reception operation for the CSI-RS in the first symbol.

In the time domain, PDCCH and CSI-RS may be mapped starting from symbol #0. The base station may be an entity that configures DCI including a CSI request (e.g. CSI request field) and/or DCI not including a CSI request. At least when AP CSI reporting is indicated (e.g. requested), the base station may implementation-wise configure such that a resource of a PDCCH carrying DCI including a CSI request does not overlap with a CSI-RS resource. In this case, since the PDCCH (e.g. PDCCH resource) does not overlap with the CSI-RS (e.g. CSI-RS resource) in the time domain, Proposed Method #8 may not be applied. Proposed Method #8 may not be applied to a channel having a condition similar to the above condition.

Proposed Method #8 may be applied to a type of CSI-RS other than AP CSI-RS. A P CSI-RS and a DL signal (e.g. AP CSI-RS) may exist in the same symbol, and a frequency resource of the P CSI-RS may be different from a frequency resource of the DL signal. An SP CSI-RS and a DL signal may exist in the same symbol, and a frequency resource of the SP CSI-RS may be different from a frequency resource of the DL signal (e.g. AP CSI-RS). QCL information (e.g. TCI state) for another type of CSI-RS (e.g. P CSI-RS or SP CSI-RS) may be applied for reception (e.g. measurement) of AP CSI-RS. Another type of CSI-RS may exist in the same symbol as the AP CSI-RS.

Importance of AP CSI reporting may be higher than importance of P CSI reporting and/or SP CSI reporting. QCL information (e.g. TCI state) for AP CSI-RS may be applied for reception (e.g. measurement) of another type of CSI-RS (e.g. P CSI-RS or SP CSI-RS). In the same time resource (e.g. the same symbol), CSI-RS may overlap with two or more DL signals. In this case, the terminal may apply, to reception of the CSI-RS, QCL information (e.g. TCI state) for a DL signal having the highest priority among the two or more DL signals. Priorities among the DL signals may be configured by RRC signaling. Alternatively, priorities among the DL signals may be defined in technical specifications. QCL (e.g. TCI state) applied to reception of the CSI-RS may be QCL for a DL signal that is located after a time required for beam application from a PDCCH or PDSCH indicating a TCI state of the DL signal. In other words, a TCI state for a DL signal that is located after a time required for beam application from a PDCCH or PDSCH indicating a TCI state of the DL signal may not be applied to reception of the CSI-RS.

The DL signal may be a DL signal associated with an ID of a CORESET through which the AP CSI request is transmitted. When no DL signal exists after a time required for beam application, the terminal may determine a QCL configuration (e.g. TCI state) for the CSI-RS based on the rule of Proposed Method #7. At least in single-DCI-based mTRP communication, scheduling for up to two PDSCHs may exist. Two PDSCHs (e.g. up to two PDSCHs) may overlap with CSI-RS in the same time resource (e.g. the same symbol). The terminal may determine a QCL configuration (e.g. TCI state) for the CSI-RS based on the rule for application of TCI states between the two PDSCHs. When a TCI state of CORESET #0 is applied to the two PDSCHs, the terminal may determine that a TCI state of the CSI-RS follows the TCI state of CORESET #0.

Alternatively, the terminal may determine that a TCI state of the CSI-RS follows a TCI state according to a TCI selection field (or TCI field) included in DCI. A configuration rule of a TCI state for PDSCH based on the TCI selection field (or the TCI field) may be associated with an ID of a CORESET through which the CSI request is transmitted. In other words, a TCI state of PDSCH scheduled by DCI transmitted within a CORESET to which a PDCCH transmitting the CSI request (e.g. DCI including the CSI request) belongs may be applied to reception of the CSI-RS according to the CSI request.

### - Proposed Method #8-1

For beam management or interference measurement in an urgent situation, an AP CSI request may be transmitted. When a CSI-RS (e.g. AP CSI-RS) and a DL signal exist in the same time resource (e.g. the same symbol), the terminal may expect to receive the AP CSI-RS based on QCL information (e.g. TCI state) configured by RRC signaling. When a CSI-RS (e.g. AP CSI-RS) and a DL signal exist in the same time resource (e.g. the same symbol), a QCL configuration (e.g. TCI state) for the DL signal may follow a QCL configuration (e.g. TCI state) for the CSI-RS.

### - Proposed Method #9

A default beam operation of a terminal may depend on a time gap (e.g. offset) between a PDCCH delivering a CSI request and a CSI-RS according to the CSI request. A time required for beam application (e.g. beam switching) may vary depending on a terminal capability. A threshold for the time gap for the default beam operation may be a sum of a processing delay for PDCCH reception and a time (e.g. minimum time) required to form an indicated beam (e.g. configured beam). A specific terminal (e.g. a terminal having reduced capability, a terminal not sensitive to latency, or a terminal having low hardware performance) may require a relatively large amount of time for beam application (e.g. beam switching). Therefore, it may be required to reconfigure a time required for beam application (e.g. beam switching). In other words, it may be required to reconfigure a number of symbols related to a beam switching time (e.g. beam switching timing), and it may be required to additionally configure a number of symbols related to a beam switching time.

**2. Scenario #2:** A numerology of a PDCCH through which DCI triggering AP CSI measurement/reporting is transmitted may be different from a numerology of a CSI-RS (e.g. CSI-RS resource).

In Scenario #2, compensation for numerology between channels may be required. A time required to compensate for numerology between channels in Scenario #2 may be different from a time required to compensate for numerology between channels in Scenario #1. The time required to compensate for numerology between channels may be classified into a beam switching time and an AP CSI-RS time. Each of the beam switching time and the AP CSI-RS time (e.g. AP CSI-RS request time) in Scenario #2 may be a sum of a default value and a delay for beam switching in Scenario #1. All the proposed methods in Scenario #1 may be applied in Scenario #2. Considering the time required to compensate for numerology between channels, some proposed methods among all the proposed methods in Scenario #1 may not be applied in Scenario #2.

**3. Scenario #3:** A time (e.g. timing) of an AP CSI request and a TCI selection time (e.g. TCI selection timing)

An AP CSI measurement/reporting operation for CSI/beam management (BM) may be triggered by a CSI request (e.g. CSI request field) included in DCI. A terminal may expect to use a default beam for reception of a CSI-RS located before a specific time (e.g. beam application time or beam switching time) from a PDCCH carrying the DCI including the CSI request. The terminal may use QCL information (e.g. TCI state) configured for resource(s) (or CSI-RS resource(s)) of a reporting configuration mapped to a codepoint indicated by the CSI request field for reception of a CSI-RS located after the specific time (e.g. beam application time or beam switching time) from the PDCCH carrying the DCI including the CSI request.

In mTRP communication, the unified TCI framework may be introduced, and a TCI configuration may be directly indicated (e.g. configured) by RRC signaling. An AP CSI measurement/reporting operation may be triggered by RRC signaling and/or DCI. The RRC signaling may be based on the unified TCI framework. In this case, reception and/or reporting through different beams for the same resource may be configured for the terminal. A CSI-RS resource for an AP CSI measurement/reporting operation triggered by RRC signaling may overlap with a CSI-RS resource for an AP CSI measurement/reporting operation triggered by DCI (e.g. CSI request). In this case, defining a priority between RRC signaling and DCI may be required.

The base station may be configured not to trigger AP CSI measurement/reporting operations by using both RRC signaling and DCI. In other words, the terminal may not expect to simultaneously receive RRC signaling and DCI that trigger measurement/reporting operations for the same AP CSI-RS within one slot. When CORESETs (e.g. CORESET IDs) through which CSI requests for AP CSI-RSs are transmitted are the same, the AP CSI-RSs may be the same AP CSI-RS. AP CSI-RSs associated with the same CSI-RS resource set list (e.g. *csi-ResourceConfigId*) may be the same AP CSI-RS. AP CSI-RSs configured in the same time resource and/or the same frequency resource may be the same AP CSI-RS. When measurement/reporting operations for the same AP CSI-RS are triggered by RRC signaling and DCI, one triggering signal (e.g. RRC signaling or DCI) may be dropped, or the triggering signal may be updated.

In order to reduce signaling overhead in mTRP communication, the unified TCI framework may be introduced. When the unified TCI framework is introduced in mTRP communication, the unified TCI framework may not affect performance of mTRP communication. Configuration by RRC signaling may have a delay compared to configuration by DCI. When RRC signaling is used, dynamic indication (e.g. configuration) may be difficult compared to DCI. Even when RRC signaling triggering AP CSI measurement/reporting is received, if DCI including a CSI request triggering the AP CSI measurement/reporting is received before transmission of a CSI report (or before CSI-RS reception or before CSI measurement), the terminal may drop the AP CSI measurement/reporting triggered by the RRC signaling. The AP CSI measurement/reporting triggered by the RRC signaling may be updated to the AP CSI measurement/reporting triggered by the DCI (e.g. CSI request).

The terminal may receive, from the base station through RRC signaling, unified TCI configuration information (e.g. information indicating application of a first TCI state or a second TCI state). Thereafter, the terminal may receive, from the base station, DCI including a CSI request triggering AP CSI measurement/reporting. In this case, the terminal may ignore QCL information (e.g. TCI state) associated with a CSI-RS resource or a CSI-RS resource set. The terminal may perform a reception operation for an AP CSI-RS based on the unified TCI configuration information indicated by RRC signaling.

In another method, the terminal may receive, from the base station, a MAC CE or DCI for activation (e.g. indication) of unified TCI states, and thereafter, the terminal may receive, from the base station, DCI including a CSI request triggering AP CSI measurement/reporting. In this case, the terminal may ignore QCL information (e.g. TCI state) configured in CSI-RS resource(s) or CSI-RS resource set(s) associated with a CSI-RS resource set list (e.g. *CSI-ReportConfig*) associated with a codepoint of the CSI request, and the terminal may expect to receive an AP CSI-RS based on QCL information (e.g. TCI state) according to the unified TCI state.

Regardless of a type of a CSI-RS (e.g. P CSI-RS, SP CSI-RS, or AP CSI-RS), configuration information for all CSI-RSs may be transmitted to the terminal through one RRC signaling. An RRC message (e.g. RRC signaling) may include QCL information (e.g. TCI state) for CSI-RS. Information on a pool used for unified TCI states may be delivered to the terminal through RRC signaling. Unified TCI states may be activated, and an indication (e.g. configuration) for unified TCI state(s) may be transmitted through a MAC CE or DCI. Thereafter, when DCI including a CSI request triggering AP CSI measurement/reporting is received, the terminal may ignore QCL information (e.g. TCI state) for CSI-RS(s) associated with the CSI request, and the terminal may expect to receive a CSI-RS (e.g. AP CSI-RS) based on the configuration of the unified TCI state.

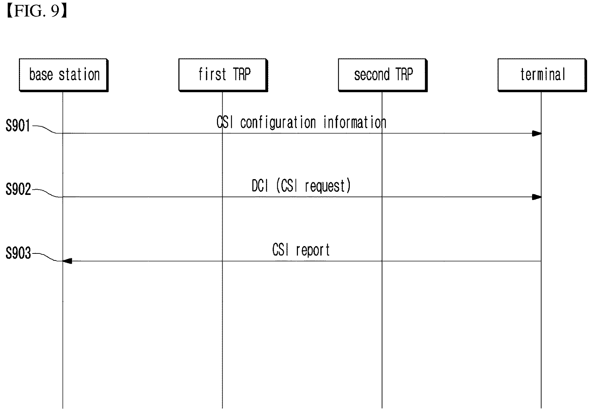

FIG. 9 is a sequence diagram illustrating exemplary embodiments of a CSI measurement and reporting method.

As shown in FIG. 9, a communication system may include a base station, one or more TRPs (e.g. a first TRP and a second TRP), and/or a terminal. The one or more TRPs may be connected to the base station. The communication system may support single-DCI-based mTRP communication and/or multi-DCI-based mTRP communication. The base station may generate CSI configuration information, and may transmit, through signaling, a message (e.g. RRC message) including the CSI configuration information to the terminal (S901). The signaling may be at least one of SI signaling, RRC signaling, MAC signaling, or PHY signaling. The CSI configuration information may be transmitted to the terminal via at least one of the first TRP or the second TRP. The terminal may receive the message from the base station, and may identify the CSI configuration information included in the message. The CSI configuration information may include CSI measurement configuration information (e.g. *CSI-MeasConfig*)*,* CSI reporting configuration information (e.g. *CSI-ReportConfig*)*,* CSI resource configuration information (e.g. *CSI-ResourceConfig*), and/or the like.

The base station may transmit a CSI-RS in CSI-RS resource(s). The CSI-RS may be transmitted to the terminal via at least one of the first TRP or the second TRP. The CSI-RS resource(s) may be configured by the CSI configuration information transmitted in step S901. The CSI-RS resource(s) may include P CSI-RS resource(s), SP CSI-RS resource(s), and/or AP CSI-RS resource(s). In order to trigger an AP CSI measurement/reporting operation, the base station may generate DCI including a CSI request field. The CSI request field (e.g. CSI request) may indicate performance of an AP CSI measurement/reporting operation. A value of the CSI request field may be associated with an AP CSI-RS resource (or a resource set or a resource set list). In other words, the DCI including the CSI request field may trigger an AP CSI measurement/reporting operation, and the DCI triggering an AP CSI measurement/reporting operation may be referred to as triggering DCI. The triggering DCI may have DCI format 0_1, 0_2, or 0_3.

The base station may transmit the triggering DCI to the terminal (S902). The triggering DCI may be transmitted to the terminal via at least one TRP among the first TRP or the second TRP. The terminal may receive the triggering DCI from the base station, and may identify that an AP CSI measurement/reporting operation is triggered based on the CSI request field included in the triggering DCI. The triggering DCI may be transmitted through a PDCCH, and the PDCCH through which the triggering DCI is transmitted may be referred to as a triggering PDCCH. A numerology (e.g. SCS) of the triggering PDCCH may be the same as a numerology of an AP CSI-RS (e.g. AP CSI-RS resource). The AP CSI-RS may be associated with the triggering DCI. In other words, the AP CSI-RS may be a CSI-RS for the AP CSI measurement/reporting operation indicated by the triggering DCI.

A DL or joint TCI state list (e.g. *dl-OrJointTCI-StateList*) may be configured for the terminal. In other words, the base station may transmit, to the terminal, a message including the DL or joint TCI state list, and the terminal may identify the DL or joint TCI state list included in the message received from the base station. The configuration operation of the DL or joint TCI state list may be performed before or after step S901. Alternatively, the configuration operation of the DL or joint TCI state list may be performed in step S901. The terminal may be configured with two indicated TCI states (e.g. two indicated joint/DL TCI states). The two indicated TCI states may include a first indicated TCI state and a second indicated TCI state.

The terminal may identify an offset between a last symbol (e.g. an end symbol) of the PDCCH (e.g. triggering PDCCH) through which the triggering DCI is delivered and the first symbol (e.g. a start symbol) of AP CSI-RS resources within the AP CSI-RS resource set. When the offset is greater than or equal to a threshold, the terminal may receive AP CSI-RS(s) in AP CSI-RS resource(s), and may generate measurement information for the AP CSI-RS(s). A reception operation of the AP CSI-RS(s) may be performed based on a TCI state configured by the base station. The terminal may transmit, to the base station, a CSI report including measurement information (e.g. measurement results) (S903). The CSI report may be transmitted to the base station via at least one TRP among the first TRP or the second TRP. The base station may receive the CSI report from the terminal, and may identify measurement information for AP CSI-RS(s) included in the CSI report.

The threshold compared with the offset may be a threshold for beam switching timing (e.g. *beamSwitchTiming*). The beam switching timing may indicate a time required for beam switching. The beam switching timing may be configured in units of symbols. A beam (e.g. a TCI state or QCL) used for reception of the triggering DCI may be different from a beam (e.g. a TCI state or QCL) used for reception of the AP CSI-RS. In other words, CSI-RS triggering with beam switching may be indicated. The CSI-RS triggering with beam switching (e.g. AP CSI-RS triggering) may be indicated by a specific parameter (e.g. *enableBeamSwitchTiming*) configured by the base station. The specific parameter may be included in serving cell configuration information (e.g. *ServingCellConfig*) transmitted by the base station. In other words, the base station may indicate (e.g. configure) CSI-RS triggering with beam switching (e.g. AP CSI-RS triggering) to the terminal. In this case, a beam (e.g. a TCI state or QCL) for reception of the triggering DCI may be different from a beam (e.g. a TCI state or QCL) for reception of the AP CSI-RS. The terminal receiving the triggering DCI may switch a beam in order to receive the AP CSI-RS. Alternatively, the threshold used for comparison with the offset may be a threshold for a time duration (e.g. *timeDurationForQCL*)*.* The time duration for QCL may indicate a time required for application of QCL. The time duration for QCL may be configured in units of slots.

Meanwhile, when the offset is smaller than the threshold, the terminal may perform a reception operation (e.g. measurement operation) for the AP CSI-RS based on methods below.
- **Case 1:** A DL signal may not exist in symbol(s) in which an AP CSI-RS is located (e.g. allocated, mapped, or present). The DL signal may be interpreted as a DL signal or a DL channel depending on a context. Alternatively, the DL signal may be interpreted as encompassing a DL signal and a DL channel depending on a context. The DL signal may be a PDCCH, a PDSCH, an SSB, a DMRS, a PT-RS, and/or another CSI-RS.

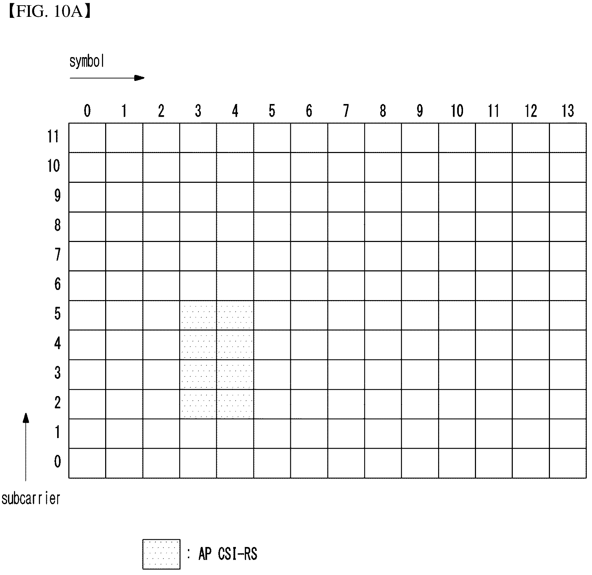

FIG. 10A is a conceptual diagram illustrating an arrangement of an AP CSI-RS according to Case 1.

As shown in FIG. 10A, an AP CSI-RS may be arranged in symbol #3 and symbol #4, and a DL signal other than the AP CSI-RS may not be arranged in symbol #3 and/or symbol #4. The AP CSI-RS may be arranged in various schemes, and an arrangement scheme of the AP CSI-RS may not be limited to the scheme illustrated in FIG. 10A.

In Case 1, a terminal may operate in a frequency range (FR) 1 or FR 2. The terminal operating in FR 2 may report, to the base station, a capability for two default beams for single-DCI-based mTRP communication. The terminal may apply, for reception (e.g. measurement) of the AP CSI-RS, a first indicated joint/DL TCI state or a second indicated joint/DL TCI state according to higher layer configuration(s). The higher layer configuration(s) may provide an AP CSI-RS resource or an AP CSI-RS resource set. The above operation may be performed by a terminal operating in FR 1 or a terminal operating in FR 2 that reported a capability for two default beams for single-DCI-based mTRP communication. The higher layer configuration(s) may mean RRC configuration(s). The higher layer configuration(s) may be indicated by RRC signaling.

A terminal not operating in FR 1 and/or a terminal operating in FR 2 that did not report a capability for two default beams for single-DCI-based mTRP communication may operate in Case 1 as follows. The terminal may apply a first indicated joint/DL TCI state for reception (e.g. measurement) of the AP CSI-RS.

Referring to FIG. 9 again, in Case 1, the terminal may perform a reception operation and/or a measurement operation for the AP CSI-RS by applying the first indicated joint/DL TCI state or the second indicated joint/DL TCI state. The terminal may generate a CSI report including measurement results (e.g. measurement information) for the AP CSI-RS, and may transmit the CSI report to the base station (S903). The CSI report may be transmitted to the base station via at least one TRP among the first TRP or the second TRP. The base station may receive the CSI report from the terminal, and may identify the measurement results for the AP CSI-RS(s) included in the CSI report.
- **Case 2:** A DL signal may exist in symbol(s) in which an AP CSI-RS is located (e.g. allocated, mapped, or present). The DL signal may have an indicated TCI state. The DL signal may be interpreted as a DL signal or a DL channel depending on a context. Alternatively, the DL signal may be interpreted as encompassing a DL signal and a DL channel depending on a context. The DL signal may be a PDCCH, a PDSCH, an SSB, a DMRS, a PT-RS, and/or another CSI-RS.

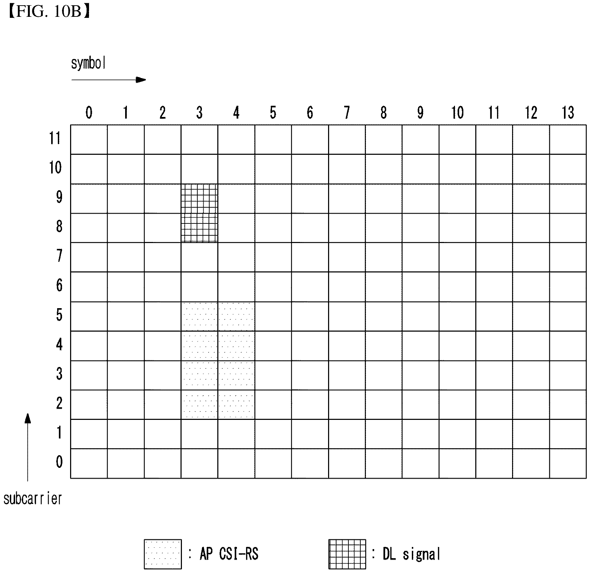

FIG. 10B is a conceptual diagram illustrating an arrangement of an AP CSI-RS according to Case 2.

As shown in FIG. 10B, an AP CSI-RS may be arranged in symbol #3 and symbol #4, and a DL signal other than the AP CSI-RS may be arranged in symbol #3. The AP CSI-RS may be arranged in various schemes, and an arrangement scheme of the AP CSI-RS may not be limited to the scheme illustrated in FIG. 10B.

In Case 2, a terminal may apply a QCL assumption of the DL signal existing in the same symbol as the AP CSI-RS in order to receive (e.g. measure) the AP CSI-RS. In other words, the terminal may perform a reception operation and/or a measurement operation for the AP CSI-RS by applying the indicated TCI state of the DL signal existing in the same symbol as the AP CSI-RS. The QCL assumption of the DL signal may be the indicated TCI state of the DL signal. The DL signal existing in the same symbol as the AP CSI-RS may be a PDSCH scheduled to have an offset greater than or equal to a threshold for a time duration for QCL (e.g. *timeDurationForQCL*)*.* The DL signal existing in the same symbol as the AP CSI-RS may be a P CSI-RS, an SP CSI-RS, and/or another AP CSI-RS scheduled to have an offset greater than or equal to a threshold for beam switching timing (e.g. *beamSwitchTiming*)*.*

When two indicated joint/DL TCI states are applied to the PDSCH existing in the same symbol as the AP CSI-RS, the terminal may apply, for reception (e.g. measurement) of the AP CSI-RS, a first indicated joint/DL TCI state or a second indicated joint/DL TCI state among two indicated joint/DL TCI states according to higher layer configuration(s).

Referring to FIG. 9 again, in Case 2, the terminal may perform a reception operation and/or a measurement operation for the AP CSI-RS by applying a QCL assumption (e.g. indicated TCI state) for the DL signal located in the same symbol as the AP CSI-RS. The terminal may generate a CSI report including measurement results (e.g. measurement information) for the AP CSI-RS, and may transmit the CSI report to the base station (S903). The CSI report may be transmitted to the base station via at least one TRP among the first TRP or the second TRP. The base station may receive the CSI report from the terminal, and may identify the measurement results for AP CSI-RS(s) included in the CSI report.

In the present disclosure, the DL signal located in the same time resource (e.g. the same symbol) as the AP CSI-RS may be at least one of a PDSCH, a PDCCH, a DMRS, an SSB, a PT-RS, a P CSI-RS, an SP CSI-RS, or another AP CSI-RS. Another AP CSI-RS may be an AP CSI-RS according to a specific condition. For example, another AP CSI-RS may be an AP CSI-RS in a non-zero power (NZP)-CSI-RS resource set.

In the present disclosure, a QCL configuration may mean a beam configuration and/or a TCI state configuration. Among the methods proposed in each scenario (e.g. proposed methods), one or more methods may be commonly applied (e.g. used) regardless of scenarios. The methods proposed in the present disclosure may be applied not only to AP CSI-RS but also to P CSI-RS and/or SP CSI-RS. The methods proposed in the present disclosure may be applied not only to an AP CSI measurement/reporting operation but also to a P CSI measurement/reporting operation and/or an SP CSI measurement/reporting operation.

The operations according to the present disclosure may be applied not only to a licensed spectrum but also to an unlicensed spectrum and/or another spectrum. The operations according to the present disclosure may be configured for each panel (e.g. antenna array). The terminal may report, to the base station, information of a time duration for each panel. Alternatively, the terminal may report, to the base station, information of a common time duration for panels. The time duration of each panel may be determined based on a common time duration and a specific offset. The specific offset may be configured for each panel. The operations of the terminal may be performed for each panel.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:
receiving, from a base station, channel state information (CSI) configuration information;
receiving, from the base station, downlink control information (DCI) including a CSI request;
receiving an aperiodic CSI-reference signal (CSI-RS) based on quasi-co-location (QCL) estimation of a downlink (DL) signal, wherein an offset between a last symbol of a physical downlink control channel (PDCCH) carrying the DCI and a first symbol of the aperiodic CSI-RS resource is smaller than a threshold and the DL signal exists in a same symbol as the aperiodic CSI-RS; and
transmitting, to the base station, a CSI report including a measurement result of the aperiodic CSI-RS.

2. The method of claim 1, wherein a numerology of the PDCCH carrying the DCI is identical to a numerology of the aperiodic CSI-RS.

3. The method of claim 1, wherein a DL or joint transmission configuration indicator (TCI) state list is configured for the UE, and the UE is configured with two indicated TCI states.

4. The method of claim 1, further comprising: receiving the aperiodic CSI-RS based on a first indicated joint/DL TCI state or a second indicated joint/DL TCI state, based on the offset being smaller than the threshold and the DL signal not existing in the same symbol as the aperiodic CSI-RS.

5. The method of claim 1, wherein the DL signal has an indicated TCI state, and the QCL estimation corresponds to the indicated TCI state.

6. The method of claim 1, wherein the offset is an offset for beam switching timing, and the beam switching timing indicates a time required for beam switching.

7. The method of claim 1, wherein CSI-RS triggering with beam switching is indicated to the UE, and a beam for receiving the DCI is different from a beam for receiving the aperiodic CSI-RS.

8. The method of claim 1, wherein the DL signal existing in the same symbol as the aperiodic CSI-RS is a periodic CSI-RS, a semi-persistent CSI-RS, or another aperiodic CSI-RS, and each of the periodic CSI-RS, the semi-persistent CSI-RS, or the another aperiodic CSI-RS is scheduled to have an offset equal to or greater than a threshold for beam switching timing.

9. The method of claim 1, wherein the DL signal existing in the same symbol as the aperiodic CSI-RS is a physical downlink shared channel (PDSCH), and the PDSCH is scheduled to have an offset equal to or greater than a threshold for a time duration for QCL.

10. The method of claim 1, wherein the DL signal existing in the same symbol as the aperiodic CSI-RS is a PDSCH, two indicated joint/DL TCI states are applied to the PDSCH, and the QCL estimation corresponds to a first indicated joint/DL TCI state or a second indicated joint/DL TCI state among the two indicated joint/DL TCI states.

11. A user equipment (UE), comprising at least one processor, wherein the at least one processor causes the UE to perform:
receiving, from a base station, channel state information (CSI) configuration information;
receiving, from the base station, downlink control information (DCI) including a CSI request;
receiving an aperiodic CSI-reference signal (CSI-RS) based on quasi-co-location (QCL) estimation of a downlink (DL) signal, wherein an offset between a last symbol of a physical downlink control channel (PDCCH) carrying the DCI and a first symbol of the aperiodic CSI-RS resource is smaller than a threshold and the DL signal exists in a same symbol as the aperiodic CSI-RS; and
transmitting, to the base station, a CSI report including a measurement result of the aperiodic CSI-RS.

12. The UE of claim 11, wherein a numerology of the PDCCH carrying the DCI is identical to a numerology of the aperiodic CSI-RS.

13. The UE of claim 11, wherein a DL or joint transmission configuration indicator (TCI) state list is configured for the UE, and the UE is configured with two indicated TCI states.

14. The UE of claim 11, wherein the at least one processor causes the UE to perform: receiving the aperiodic CSI-RS based on a first indicated joint/DL TCI state or a second indicated joint/DL TCI state, based on the offset being smaller than the threshold and the DL signal not existing in the same symbol as the aperiodic CSI-RS.

15. The UE of claim 11, wherein the DL signal has an indicated TCI state, and the QCL estimation corresponds to the indicated TCI state.

16. The UE of claim 11, wherein the offset is an offset for beam switching timing, and the beam switching timing indicates a time required for beam switching.

17. The UE of claim 11, wherein CSI-RS triggering with beam switching is indicated to the UE, and a beam for receiving the DCI is different from a beam for receiving the aperiodic CSI-RS.

18. The UE of claim 11, wherein the DL signal existing in the same symbol as the aperiodic CSI-RS is a periodic CSI-RS, a semi-persistent CSI-RS, or another aperiodic CSI-RS, and each of the periodic CSI-RS, the semi-persistent CSI-RS, or the another aperiodic CSI-RS is scheduled to have an offset equal to or greater than a threshold for beam switching timing.

19. The UE of claim 11, wherein the DL signal existing in the same symbol as the aperiodic CSI-RS is a physical downlink shared channel (PDSCH), and the PDSCH is scheduled to have an offset equal to or greater than a threshold for a time duration for QCL.

20. The UE of claim 11, wherein the DL signal existing in the same symbol as the aperiodic CSI-RS is a PDSCH, two indicated joint/DL TCI states are applied to the PDSCH, and the QCL estimation corresponds to a first indicated joint/DL TCI state or a second indicated joint/DL TCI state among the two indicated joint/DL TCI states.
